(19)

Europäisches
Patentamt
European
Patent Office
Office européen
des brevets

(11)     **EP 3 940 487 B1**

(12)                    **EUROPEAN PATENT SPECIFICATION**

(45) Date of publication and mention
of the grant of the patent:
**20.09.2023   Bulletin 2023/38**

(51) International Patent Classification (IPC):
*G05B 23/02* (2006.01)      *B60W 30/095* (2012.01)
*G06Q 50/30* (2012.01)      *G06F 11/36* (2006.01)

(21) Application number: **20185653.1**

(52) Cooperative Patent Classification (CPC):
**G05B 23/024; B60W 30/095**

(22) Date of filing: **14.07.2020**

(54) **ESTIMATION OF PROBABILITY OF COLLISION WITH INCREASING SEVERITY LEVEL FOR AUTONOMOUS VEHICLES**

SCHÄTZUNG DER KOLLISIONSWAHRSCHEINLICHKEIT MIT STEIGENDEM SCHWEREGRAD FÜR AUTONOME FAHRZEUGE

ESTIMATION DE LA PROBABILITÉ DE COLLISION AVEC UN NIVEAU DE GRAVITÉ CROISSANT POUR VÉHICULES AUTONOMES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.01.2022   Bulletin 2022/03**

(73) Proprietor: **Zenuity AB**
**417 56 Göteborg (SE)**

(72) Inventors:
- **GYLLENHAMMAR, Magnus**
**435 43 Pixbo (SE)**
- **ZANDÉN, Carl**
**437 38 Lindome (SE)**
- **KHORSAND VAKILZADEH, Majid**
**431 66 Mölndal (SE)**
- **FALKOVÉN, Andreas**
**431 34 Mölndal (SE)**
- **OLSSON, Joakim**
**421 40 Göteborg (SE)**
- **ZWIRGLMAIER, Kilian**
**81667 München (DE)**
- **ULAS, Cagdas**
**85399 Hallbergmoos (DE)**

(74) Representative: **Zacco Sweden AB**
**P.O. Box 5581**
**Löjtnantsgatan 21**
**114 85 Stockholm (SE)**

(56) References cited:
**US-A1- 2019 213 103      US-A1- 2019 354 643**

- **SIU-KUI AU ET AL: "Estimation of small failure probabilities in high dimensions by subset simulation", PROBALISTIC ENGINEERING MECHANICS, vol. 16, no. 4, 1 October 2001 (2001-10-01), pages 263-277, XP055759092, FR ISSN: 0266-8920, DOI: 10.1016/S0266-8920(01)00019-4**
- **DIEGO A. ALVAREZ ET AL: "Estimation of the lower and upper bounds on the probability of failure using subset simulation and random set theory", MECHANICAL SYSTEMS AND SIGNAL PROCESSING, vol. 100, 1 February 2018 (2018-02-01), pages 782-801, XP055759094, AMSTERDAM, NL ISSN: 0888-3270, DOI: 10.1016/j.ymssp.2017.07.040**
- **Joanna Kappas: "Review of Risk and Reliability Methods for Aircraft Gas Turbine Engines", , 1 May 2002 (2002-05-01), pages 1-42, XP055403454, Retrieved from the Internet: URL:http://www.ewp.rpi.edu/hartford/~ernesto/F2008/SMRE/Papers/Aircraft/Kappas.pdf [retrieved on 2017-09-04]**

Remarks:
The file contains technical information submitted after the application was filed and not included in this specification

EP 3 940 487 B1

**Description**

<u>TECHNICAL FIELD</u>

The present disclosure relates to Automated Driving Systems (ADS) for vehicles, and more specifically, the present disclosure relates to methods and systems of estimating a probability of collision with increasing severity level for autonomous vehicles.

<u>BACKGROUND</u>

During these last few years, the development of autonomous vehicles has exploded and many different solutions are being explored. An increasing number of modern vehicles have advanced driver-assistance systems (ADAS) to increase vehicle safety and more generally road safety. ADAS - which for instance may be represented by adaptive cruise control, ACC, collision avoidance system, forward collision warning, etc. - are electronic systems that may aid a vehicle driver while driving. To function as intended, ADAS may rely on inputs from multiple data sources, such as e.g. automotive imaging, LIDAR, radar, image processing, computer vision, and/or in-car networking.

Today, development is ongoing in both ADAS as well as Autonomous Driving (AD), within a number of different technical areas within these fields. ADAS and AD will herein be referred to under the common term Automated Driving System (ADS) corresponding to all of the different levels of automation as for example defined by the SAE J3016 levels (0 - 5) of driving automation. US 2019 213103 A1 discloses a method for verifying autonomous control software for operating a vehicle in an autonomous driving mode.

Accordingly, in a not too distant future, ADS solutions will to a greater extent find their way into modern vehicles. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles and/or relevant signage.

ADS features as described above are, however, bound to be required to function with a high integrity to provide sufficiently low risk for the vehicle occupant(s) as well as their surrounding environments. Ensuring that the risk is sufficiently low may require intractable amounts of data for statistical proofs, and would, according to an example, take e.g. approximately a hundred vehicles to drive continuously for five centuries, to acquire. Moreover, a key aspect of the verification of autonomous features is to provide evidence that the ADS feature complies with an acceptable safety norm. The safety norm is a type of statistical goal, that in principle states the highest acceptable frequency of failures resulting in accidents having a given severity level. In the automotive industry this norm may be translated to the Automotive Safety Integrity Level (ASIL) of safety goals using the ISO26262 standard, based on estimates of severity, exposure, and controllability of a failure.

As an example, the highest integrity (ASIL D) is sought towards failures in situations that are common (exposure level E4), difficult to control (controllability level C3), and which can lead to accidents resulting in severe injuries or death (severity level S3). The safety goals (i.e. requirements) that are formulated to ensure that such failures do not occur, are thus assigned with ASIL D in accordance with ISO26262. This effectively means that the safety goal should have an estimated failure rate of less than $10^{-9}$ failures/hour. For failures associated with severity levels S2 (survival of involved actors probable) or S1 (light/moderate injuries), given the same exposure level (E4) and controllability level (C3), results in ASIL C and ASIL B, which can be translated to acceptable failure rates of $10^{-8}$ and $10^{-7}$ failures/hour respectively.

To estimate whether a complex autonomous feature complies with the safety norm for different severity levels is not a simple task, and brute force methods are arguably proven unfeasible (Kalra & Padock, 2016). There is therefore a need for improvements in the art for verifying and developing autonomous features in the automotive industry, and in particular, there is a need for new solutions that are reliable and efficient while providing a more detailed result for further analysis than presently known.

<u>SUMMARY</u>

It is therefore an object of the present disclosure to provide a computer-implemented method for estimating a probability of failure for different severity levels for an ADS feature of a vehicle and a corresponding computer-readable storage medium that alleviate all or at least some of the drawbacks of presently known solutions.

In particular, it is an object of the present disclosure to provide a method or tool to assess compliance of an ADS feature to a safety norm using statistics that saves time and resources needed for verification and/or development activities.

These and other objects are achieved by means of a computer-implemented method for estimating a probability of failure for different severity levels for an ADS feature of a vehicle and a corresponding computer-readable storage medium, and control system as defined in the appended claims. The term exemplary is in the present context to be understood as serving as an instance, example or illustration.

According to a first aspect of the present disclosure, there is provided a computer-implemented method for estimating a probability of failure for different severity levels for an Automated Driving System (ADS) feature in a virtual test environment. The method comprises obtaining a parametrized statistical model indicative of a statistical distribution related to a plurality of scenarios in a real-world environment in an Operational Design Domain (ODD) of the ADS feature to be tested. The method further comprises estimating a probability of failure of the ADS feature over time in a virtual test environment by running a structural reliability method (such as e.g. subset simulation) based on the parametrized statistical model and on a Limit State Function (LSF), where the LSF is indicative of the ADS feature's performance. In more detail, the LSF $g_i(\theta)$ is a function of a set of scenario parameters $\theta = [\theta_1, \theta_2, ..., \theta_n]$. The LSF $g_i(\theta)$ comprises a first function, $g_F(\theta)$ and a second function, $g_S(\theta)$. The first function $g_F(\theta)$ is a function of at least one scenario parameter indicative of an occurrence of a failure scenario. The second function, $g_S(\theta)$ is a function of at least one scenario parameter indicative of a severity level of the failure scenario, such that the estimated probability of failure of the ADS feature is further indicative of an estimated probability of failure for at least two different severity levels.

The resulting estimated probability of failure may be employed in order to assess the compliance of the ADS feature to a safety norm, whereby advantages in terms of reduced time and resources for verification activities are readily achievable. Moreover, the above proposed method may be used as a method for generating important test cases for development, thereby providing advantages in terms of reduced time and resources for development.

According to a second aspect of the present disclosure, there is provided a (non-transitory) computer-readable storage medium storing one or more programs configured to be executed by one or more processors of a processing system, the one or more programs comprising instructions for performing the method according to any one of the embodiments disclosed herein. With this aspect of the disclosure, similar advantages and preferred features are present as in the previously discussed first aspect of the disclosure.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect of the present disclosure, there is provided a control system for estimating a probability of failure for different severity levels for an Automated Driving System (ADS) feature in a virtual test environment. The control circuitry is configured to obtain a parametrized statistical model indicative of a statistical distribution related to a plurality of scenarios in a real-world environment in an Operational Design Domain (ODD) of the ADS feature. Further, the control circuitry is configured to estimate a probability of failure of the ADS feature over time in the virtual test environment by running a structural reliability method based on the parametrized statistical model and on a Limit State Function, LSF, indicative of the ADS feature's performance. In more detail, the LSF, $g_i(\theta)$, is a function of a set of scenario parameters, $\theta = [\theta_1, \theta_2, ..., \theta_n]$, indicative of an operating environment of the ADS feature. Moreover the LSF, $g_i(\theta)$, comprises:

- A first function, $g_F(\theta)$, that is a function of at least one scenario parameter indicative of an occurrence of a failure scenario.

- A second function, $g_S(\theta)$, that is a function of at least one scenario parameter indicative of a severity level of the failure scenario, such that the estimated probability of failure of the ADS feature is further indicative of an estimated probability of failure for at least two different severity levels.

With this aspect of the disclosure, similar advantages and preferred features are present as in the previously discussed first aspect of the disclosure.

Further embodiments of the disclosure are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present disclosure will in the following be further clarified with reference to the embodiments described hereinafter.

BRIEF DESCRIPTION OF THE DRAWINGS

Further objects, features and advantages of embodiments of the disclosure will appear from the following detailed description, reference being made to the accompanying drawings, in which:

Fig. 1 is a schematic flow chart representation of a method for estimating a probability of failure for different severity levels for an Automated Driving System (ADS) feature in a virtual test environment in accordance with an embodiment of the present disclosure.

Fig. 2 is a schematic graph depicting an estimated probability of failure of the ADS feature generated by means of a method in accordance with an embodiment of the present disclosure.

Fig. 3 is a schematic block diagram representation of a processing system for estimating a probability of failure for different severity levels for an Automated Driving System (ADS) feature in a virtual test environment in accordance with an embodiment of the present disclosure.

DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

As mentioned in the foregoing, to estimate whether a complex ADS feature complies with a safety norm for different severity levels is not a simple task, and brute force methods are arguably proven unfeasible. Moreover, performing grid search or Monte-Carlo simulations are also arguably ineffective due to the high-dimensional parameter space of the statistical model related to the scenarios under test and/or the low failure probabilities of mature AD features. Thus, the present inventors realized that structural reliability methods, such as e.g. subset simulation (may be abbreviated as SuS or SS) methods, may be employed in order to solve this complex task. Structural reliability methods may be understood as advanced stochastic methods for estimating probabilities of rare failure events, and was originally developed within the field of engineering mechanics.

Due to their ability to efficiently transition scenario simulations towards the failure region in a high dimensional parameter space (which is the case for ADS feature simulations), the present inventors realized that it may be advantageously employed within software development and verification of ADS features. Furthermore, provided a simulation tool (software tool) and a multi-dimensional statistical model of the environment, structural reliability method simulations allows for efficiently estimating the probability of failure of an ADS feature. Since the failure rate estimations are based on statistical models that in turn are based on real traffic data, the failure rate estimations are highly relevant for the development and verification of ADS features.

Structural reliability methods, such as SuS, searches for failure regions in the scenario space using a so-called Limit State Function (LSF), which may be understood as a continuous function describing the performance of the system (i.e. ADS feature under test). Thus, for the autonomous driving domain, the LSF may for example be based on a Time-to-Collision (TTC) or a Post Encroachment Time (PET), which both approach 0 as the situation comes closer to a crash.

In more detail, subset simulation is based on a conceptual idea of decomposing a rare event $\delta$ into a sequence of more common events $\delta_i$, so that

$$\delta = \delta_m \subset \delta_{m-1} \subset \cdots \subset \delta_2 \subset \delta_1 \qquad (1)$$

If the probability $\mathbb{P}(\delta)$ of the event $\delta$ occurring is very low, say on the order of $10^{-9}$, then directly estimating $\mathbb{P}(\delta)$ also becomes very difficult, requiring large amount of computational resources to even sample a single event. However, using Subset Simulation, the estimation of $\mathbb{P}(\delta)$ can be broken down into evaluating a series of conditional probabilities for each of the more frequent events $\delta_i$,

$$\mathbb{P}(\delta) = \mathbb{P}(\delta_1)\mathbb{P}(\delta_2|\delta_1)\ldots\mathbb{P}(\delta_m|\delta_{m-1}) \qquad (2)$$

where $\mathbb{P}(\delta_i|\delta_{i-1})$ denotes the conditional probability of event $\delta_i$ given the occurrence of $\delta_{i-1}$. Moreover, in SuS methods the conditional failure probabilities may be estimated by means of Markov chain Monte Carlo algorithms. In the above formulation, the failure domain is represented by the set of values of scenario parameters $\theta$ that lead to unacceptable system performance:

$$\delta = \{\boldsymbol{\theta}: g(\boldsymbol{\theta}) < y^*\} \qquad (3)$$

Here, $y = g(\theta)$ denotes the system performance LSF. The LSF may, as mentioned, be a function of e.g. the time to collision (TTC) or the deviation from the lane center. In more detail, the LSF may be a function of the following variables:

> 1) The behavior of the ADS feature under test. For instance, it can be defined as time to collision, or deviation from lane center.

> 2) The scenario parameters $\theta = [\theta_1, \theta_2, \ldots, \theta_n]$ describing the environment, in which the AD system performs, e.g. target vehicle scenario trajectory, target vehicle starting position relative to host, initial state of ego-vehicle, initial state of the ADS feature, scenario duration, and so forth. Thus, "the scenario parameters $\theta$ describing the environment" should be interpreted broadly and does not only pertain to parameters describing external states, but the full situation/scenario under which the performance of the ADS feature will be tested.

A comparison of the system performance $y$ (e.g. TTC) with a specified critical value $y^*$ (e.g. TTC = 0) defines the failure domain, i.e. if $\geq y^*$, then the system may be concluded to be "safe", and if $y < y^*$, then the system has failed. In other words, the failure domain is the set of parameters (the scenario trajectory, starting position, duration, road curvature, etc.) where simulations for the ADS feature leads to a collision (TTC = 0).

However, using only TTC or PET as a basis for the LSF, one can effectively estimate a crash failure rate, but there will be little to no nuances in the estimation, and crashes of different severity levels cannot be distinguished. It should be noted that even though the discussion mainly pertains to subset simulation (SuS), the skilled person readily realizes how to adapt the concepts herein to other structural reliability methods, and should therefore not necessarily be construed as limiting but merely as an example serving to elucidate the concepts disclosed herein.

Thus, the present inventors realized that one may provide an "extended" LSF, and then run a structural reliability method with the "extended" LSF, and thereby be able to estimate probabilities of failures for different severity levels. More specifically, the extended LSF allows the structural reliability method simulation to explore the parameter space beyond the "failure case".

In more detail, the "extended" LSF as described herein may be understood as a piecewise function or hybrid function comprising two sub functions, namely a first function and a second function as denoted herein. The first function is a function of a parameter indicative of an occurrence of a failure scenario (e.g. a function of TTC) while the second function is a function of a scenario parameter indicative of a severity level of the failure scenario (e.g. a function of delta speed at collision). Thus, assuming that the second function is configured so to attain more negative values for more severe crashes, e.g. by using minus delta speed at collision, it is possible to distinguish different severity classes of the simulation results. Being able to generate probability of failure for different severity classes may be very beneficial for focusing development and verification activities to the most needed areas/aspects of the system under test (ADS feature under test).

In an illustrative example, assuming that a "true" failure rate for an ADS feature in a specific scenario is $10^{-7}$ failures/h for incidents of severity class S1 (light or moderate injuries) and $10^{-9}$ failures/h for incidents of severity class S3 (life-threatening/fatal injuries). Further it is assumed that the scenario is a low controllability (C3) and a high exposure scenario (E4).

Then, without the extended LSF, conventional simulations may show that the ADS feature has a probability of failure at $10^{-7}$ failures/hour, for a low controllability (C3) and high exposure scenario (E4). Now, without being able to distinguish different severity levels one would have to assume that it is the highest severity class (S3), which translates to an ASIL D requirement that can be translated to an acceptable failure rate of $10^{-9}$ failures/hour. Thus, the simulation would in this case indicate that the ADS feature is not performing adequately.

However, by employing an extended LSF, as proposed herein, the simulation could show that the probability of failure at $10^{-7}$ failures/h is for severity class S1, which translates to a fulfilment of ASIL B requirements (S1, C3, E4), where the acceptable failure rate is $10^{-7}$ failures/hour. Moreover, the results could further show that the ADS feature performs with a failure rate of $10^{-9}$ failures/h for incidents of severity class S3, which would indicate that the system actually fulfils ASIL D requirements. Thus, by allowing the structural reliability method simulation to explore the parameter space beyond the simple "failure case", more information may be obtained from simulations and verification/development activities may be properly focused where needed. It should be noted that even if the present disclosure mainly pertains to safety goals using the ISO26262 standard, it should be not construed as limiting to the present disclosure but merely serves to elucidate and illustrate the teachings herein. Thus, the herein proposed solutions may be used together with other known or presently unknown future standards that are related to "quantitative risk norms" within the automotive field.

Thus, in accordance with the embodiments, as disclosed herein, of a method for estimating a probability of failure for different severity levels for an ADS feature in a virtual test environment, one is given an effective tool for assessing compliance to a safety norm using real-world statistics, which may drastically reduce the time and resources needed for verification activities. Moreover, the results from the herein proposed method may be used to generate important test cases for development, which may drastically reduce the time and resources needed for development activities.

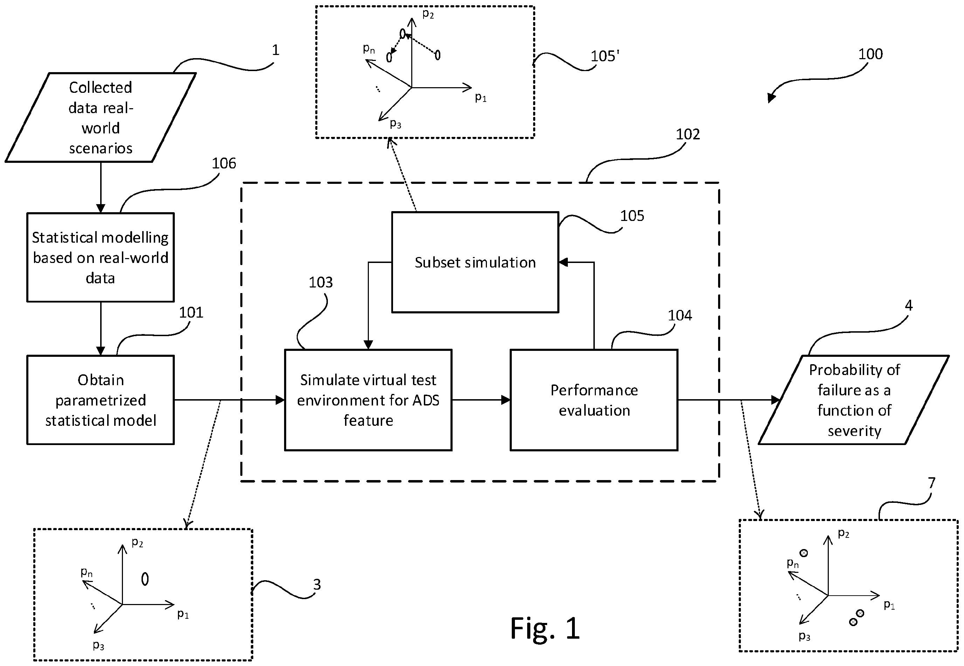

Fig. 1 is a schematic flow chart representation of a method 100 for estimating a probability of failure for different severity levels for an ADS feature in a virtual test environment. The ADS feature is preferably, but not necessarily, an ADS feature of level 3 or higher according to the SAE J3016 levels of driving automation, such as for example a highway pilot feature, a traffic jam pilot feature, or the like. Herein, the term ADS feature or autonomous driving feature may refer to any arbitrary ADS, ADAS or autonomous driving feature, e.g. as already known in the art and/or yet to be developed. The term obtaining is herein to be interpreted broadly and encompasses receiving, retrieving, collecting, acquiring, and so forth.

The method 100 comprises obtaining 101 a parametrized statistical model 3 indicative of a statistical distribution related to a plurality of scenarios in a real-world environment in an Operational Design Domain (ODD) of the ADS feature to be tested. An Operational design domain (ODD) is to be understood as a description of the operating conditions in which an automated or a semi-automated driving system (i.e. AD or ADAS) is designed to function, including, but not limited to, geographic, roadway (e.g. type, surface, geometry, edges and markings), environmental parameters, connectivity, surrounding objects, traffic parameters, and speed limitations.

As a pre-requisite, data 1 may be collected from real-life traffic scenarios in order to gather statistics of the traffic scenario dynamics (i.e. probabilities of various situations that occur during a drive). Further, a multivariable statistical model is fit 106 to the gathered parametrized recorded scenarios 1. The multivariable statistical model may for example be in the form of a Gaussian mixture model. Then, a parametrized statistical model 3 of scenarios of interest in a given ODD of the ADS feature may be obtained 101.

In reference to the term "statistical model", it may be understood as a description of what the ADS can statistically expect from its operating environment. In more detail, from the start one can model a set of field data by different segmentation and quantification methods (may be referred to as "scenario identification"). In other words, the outcome of a scenario identification process is a set of scenario parameters, and the statistical model(s) is/are obtained by modelling the scenarios identified in the field data. Thus, a statistical model may be understood as a mathematical representation of a statistical distribution. In more detail, the statistical model of an environment quantifies what the ADS can expect from its surroundings in a statistical way. In other words, the statistical model provides a probability measure for at least one scenario (e.g. overtaking, pedestrian crossings, animal crossings, other road users' behaviours, etc.) that are probable to happen within the environment. Thus, in order to statistically describe the environment, the statistical distributions corresponding to all scenarios may be pooled together in order to form a "global" statistical distribution. Further details related to the statistical modelling and how a parametrized statistical model may be generated is for example disclosed in the currently co-pending European Patent Application No. 20169897.4, by the same applicant, incorporated herein by reference.

Further, the method 100 comprises estimating 102 a probability of failure of the ADS feature over time in a virtual test environment by running 105 a structural reliability method, such as SuS, based on the parametrized statistical model and on a Limit State Function (LSF), where the LSF is indicative of the ADS feature's performance. In more detail, the LSF $g_i(\theta)$ is an "extended" LSF in the form of a piecewise function of a set of scenario parameters $\theta = [\theta_1, \theta_2, ..., \theta_n]$. The LSF $g_i(\theta)$ comprises a first function, $g_F(\theta)$ and a second function, $g_S(\theta)$, where the F in the first function denotes "Failure" and the S in the second function denotes "Severity". In more detail, the first function $g_F(\theta)$ is a function of at least one scenario parameter indicative of an occurrence of a failure scenario, while the second function $g_S(\theta)$ is a function of at least one scenario parameter indicative of a severity level of the failure scenario. Thereby, the estimated 102 probability of failure of the ADS feature is further indicative of an estimated probability of failure 4 for at least two different severity levels.

In the context of the present disclosure, the statistical model may in particular indicative of the scenario(s) under test for the ADS feature. For example, if the ADS feature is tested with regards to cut-ins, then the statistical model comprises information of statistical distributions related to cut-ins. Accordingly, the statistical model used for the estimation 102 of the probability of failure of the ADS feature may be obtained by fitting a model to all cut-ins, or it may be extracted from a "global" statistical model indicative of the statistical distributions of a plurality of scenarios of the complete ODD of the ADS feature. Accordingly, in order to check the compliance with a set of predefined safety norms for the ADS feature's ability to handle cut-ins, a statistical model indicative of one or more statistical distributions related to cut-ins is used as input to the structural reliability method simulation. However, in some embodiments the statistical model used for the estimation 102 of the probability of failure of the ADS feature may be indicative of a plurality of scenarios in the ODD of the ADS feature. Thereby, one can estimate the probability of failure of the ADS feature in its entire ODD, or at least for more than one specific scenario the ADS is configured to handle.

Furthermore, the estimation 102 of the probability of failure of the ADS feature under test may comprise substeps such as (iteratively) generating a set of parameters $\theta_i$ from the statistical model, simulating 103 the scenario corresponding to $\theta_i$ in a virtual test environment, and evaluating the performance of the ADS 104 in scenario $\theta_i$ based on the output of the virtual simulation environment. The iterative process is indicated by the feedback loop 105 associated with subset simulation methods. In particular, SuS progressively explores the parameter space of the statistical model of the scenario under test to efficiently generate scenarios in the failure region of the ADS feature (as indicated in box 105'). This is done by automatically decomposing the failure region into a set of more frequent events, see Eq. **Error! Reference source not found..** Thus, the estimation of probability of failure $\mathbb{P}(\delta)$ is broken down to estimation of larger probabilities as shown in Eq. **Error! Reference source not found.,** in which each conditional failure probabilities can be estimated by means of Markov chain Monte Carlo algorithms, such as Modified Metropolis Algorithm (MMA). MMA is an advanced sampling technique which is tailored to generate samples from the conditional distributions. In particular, MMA performs this by taking the following sub-steps: (iteratively) generating a set of parameters $\theta_i$ 3 from the statistical model of the scenario(s) under test, simulating 103 the scenario corresponding to $\theta_i$ in a virtual test environment, and evaluating 104 the performance $y_i = g(\theta_i)$ of the ADS feature in scenario $\theta_i$ based on the output of the virtual simulation environment. If $y_i$ fulfils the condition in Eq. **Error! Reference source not found.,** it is accepted otherwise it is rejected and discarded. MMA iteratively repeats 105 this procedure to generate enough samples in the failure domain (as indicated in box 7) of the ADS feature under test to be able to reliably estimate the probability of failure $\mathbb{P}(\delta)$.

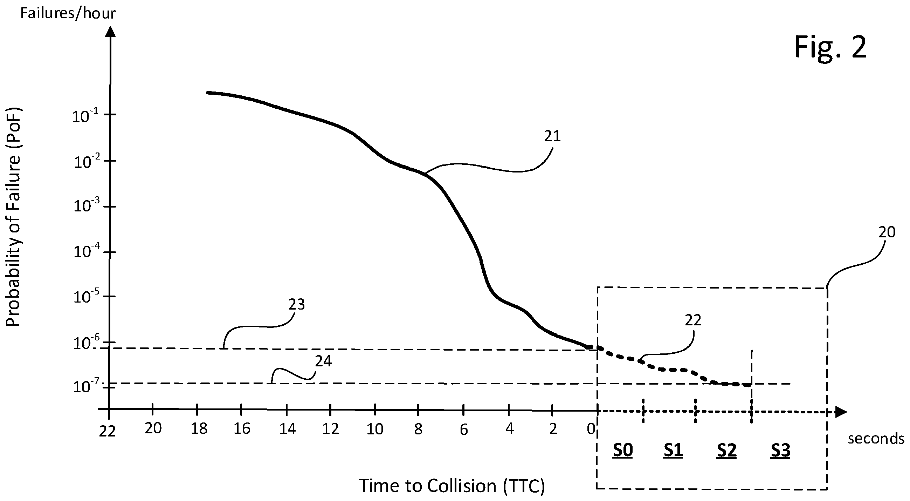

Moreover, the "output" from specific steps in the flow chart representation of the method 100 is indicated in boxes 3, 7 and 105' in order to further elucidate the concepts disclosed herein. As the skilled reader readily understands, even if the illustrated embodiment of Fig. 2 is mainly representative of subset simulation, utilization of other structural reliability methods such as importance sampling is equally applicable. These alternative embodiments will however for the sake of brevity and conciseness not be depicted in the appended drawings

The effect of the simulation in accordance with the embodiments disclosed herein are illustrated in Fig. 2 showing a graph of the estimated probability of failure over a Time to Collision (TTC). In particular, the effect provided by the embodiments disclosed herein are indicated in the dashed box 20. In more detail, it is provided a possibility to continue exploration beyond just "crashes" (i.e. event at TTC = 0) to "crashes of different severity". The effect of the "extended" LSF can be seen in the dashed part 22 of the line plot 21, 22, which continues beyond a "failure" scenario (i.e. TTC = 0), whereby one can obtain estimations for the probability of failures for different severity levels S0, S1, S2, and S3.

From the simulation one can then extract the estimated results 23, 24, and compare it to e.g. a safety norm dictating maximum failure rates for different severity levels, as indicated in Table 1 below.

**Table 1: Example of an evaluation of compliance to a safety norm (ASIL) based on the results from Fig. 2, assuming exposure level (E) is E4 and controllability level (C) is C3.**

| Safety norm | | | Estimated values | |
|---|---|---|---|---|
| Severity | Max. failure rate (failures/h) | | Severity | Estimated failure rate (failures/h) |
| S0 | QM | | S0 | 1E-6 |
| S1 | 1E-8 | | S1 | 7E-7 |
| S2 | 1E-8 | | S2 | 3E-7 |
| S3 | 1E-9 | | S3 | 1E-7 |

It should be noted that ISO standard does not assign any ASIL requirement to events that are S0 and they are called quality management (QM). This means that ISO does not suggest any upper bound on failure rate for QM and leaves that to the company to design a product that can satisfy the costumer need. Therefore, companies designing the ADS set an upper bound on failure rate of S0 events. Nevertheless, still the herein proposed method can be used to check if the performance of the ADS feature fulfils such a condition.

Reverting back to the discussion related to the extended limit state function (LSF), for a given ADS feature it is now possible to calculate the probability $\Pr(S_i)$ of encountering scenarios with severity class $S_i$ ($i \in 0, 1, 2, 3$). In more detail, it was realized by the present inventors that a severity is only assigned to scenarios that resulted in a failure (collision), which is equal to $\Pr(S_i, \delta)$, i.e. the probability of encountering a collision with severity class $S_i$. Using the definition of conditional probabilities, this may be rewritten as:

$$\Pr(S_i, \delta) = \Pr(\delta) \cdot \Pr(S_i|\delta) \qquad (4)$$

The probability in equation (4) may be computed approximately by means of Structural reliability methods, such as SuS. To this end the LSF may be defined as:

$$g_i(\boldsymbol{\theta}) = g_F(\boldsymbol{\theta}) - g_S(\boldsymbol{\theta}) + c_i \qquad (5)$$

The LSF in equation (5) accordingly comprises three "parts", namely a first function $g_F(\theta)$, a second function $g_S(\theta)$, and a class parameter $c_i$ defining a threshold value for the severity level of the failure scenario.

The first function, $g_F(\boldsymbol{\theta}) : \mathbb{R}^n \to \mathbb{R}_0^+$, is according to some embodiments a continuous functions, defined such that $g_F(\theta) = 0$ corresponds to a collision and $g_F(\theta) \geq 0$ to non-collision events. Measures commonly used in the field of automotive that readily satisfy this are for example, Time To Collision (TTC) and a Post Encroachment Time (PET). However, other threat measures that are monotonically increasing such as e.g. Brake Threat Number (BTN) may be used by employing a suitable transformation such that the condition above is fulfilled. Another example threat measure that may be used is Time To Brake (TTB). In other words, in accordance with some embodiments, the first function, $g_F(\theta)$, is defined so to have a zero value for failure scenarios and a non-zero value for non-failure scenarios.

The second function, $g_S(\boldsymbol{\theta}) : \mathbb{R}^n \to \mathbb{R}_0^+$, is according to some embodiments a continuous function that represents the severity of a collision, such that a higher value of $g_S(\theta)$ corresponds to a more severe collision. For non-collision scenarios the second function may be defined as, $g_S(\theta) = 0$. In some embodiments, $g_S(\theta)$ could be defined using the absolute delta velocity during the collision, $|\Delta v_{col}(\theta)|$ as:

$$g_S(\boldsymbol{\theta}) = \begin{cases} |\Delta v_{col}(\boldsymbol{\theta})|, \text{ for collision scenarios} \\ \quad 0, \quad \text{otherwise} \end{cases} \qquad (6)$$

Thus, in some embodiments, the second function, $g_S(\theta)$, is defined so to have a zero value for non-failure scenarios, and a non-zero value for failure scenarios. Moreover, in accordance with some embodiments, the second function, $g_S(\theta)$, is a function of at least one of a delta speed at collision, a weight of the vehicle, a weight of a collision object, an absolute speed of the vehicle at collision, an angle of the vehicle at collision, a restitution factor, and a point of impact at collision. In other words, the second function $g_S(\theta)$ may be a function of at least one variable indicative of the severity of the failure scenario (e.g. collision, departure from road, etc.). Further, the second function may be a function of a sub-function indicative a severity of injury to occupants, which may be a function of the age of occupants, use of seat belt, and so forth. The sub-function (may also be referred to as an injury severity risk function) may be estimated based on historical data from an accident database.

Moreover, the severity classes $S_i$ may be defined based on $g_S(\theta)$ using thresholds $c_i$ ($i \in 0, ..., n + 1$), i.e. a collision scenario $\theta_j \in \delta$ is said to have severity class $S_i$, if and only if $c_i < g_S(\theta_j) \leq c_{i+1}$. The lower threshold for severity class $S_0$, $c_1 = 0$ and the upper threshold for severity class $S_n$, $c_{n+1} = \infty$. Depending on the scenario class of interest the corresponding threshold $c_i$ is used in Equation (5) as a constant, $c_i$. In this way failure domain corresponding to e.g. collisions with severity level $S_3$ may be decomposed to more frequent events as:

$$\delta = \delta_{S_3} \subset \delta_{S_2} \subset \delta_{S_1} \subset \delta_{collision} \subset \cdots \subset \delta_i \subset \cdots \subset \delta_1 \qquad (7)$$

This means that in a single run, SuS successively forms the more frequent domains to be able to progress toward the desired failure domain, i.e. collision scenarios $\theta_j \in \delta_{S_3}$.

Executable instructions for performing these functions are, optionally, included in a non-transitory computer-readable storage medium or other computer program product configured for execution by one or more processors.

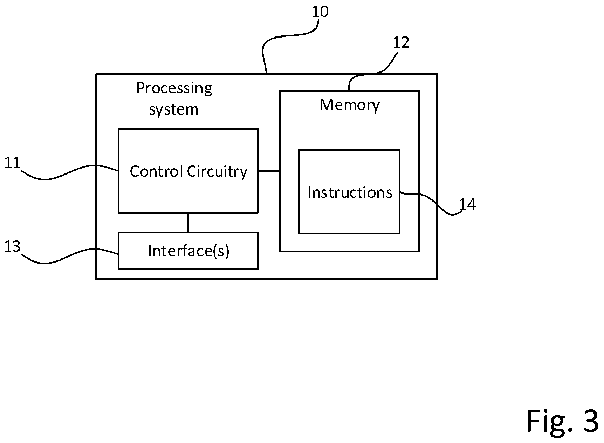

Fig. 3 is a schematic block diagram representation of a processing system 10 for estimating a probability of failure for different severity levels for an ADS feature in a virtual test environment. The processing system 10 comprises control circuitry 11 (may also be referred to as control unit, controller, one or more processors), a memory 12, a communication interface 13, and any other conventional components/functions required for performing the methods according to any one of the embodiments disclosed herein. In other words, executable instructions 14 for performing these functions are, optionally, included in a non-transitory computer-readable storage medium 12 or other computer program product configured for execution by one or more processors 11.

In more detail, the control circuitry 11 is configured to obtain a parametrized statistical model indicative of a statistical distribution related to a plurality of scenarios in a real-world environment in an Operational Design Domain (ODD) of the ADS feature. Further, the control circuitry 11 is configured to estimate a probability of failure of the ADS feature over time in the virtual test environment by running a structural reliability method based on the parametrized statistical model and on a Limit State Function, LSF, indicative of the ADS feature's performance. In more detail, the LSF, $g_i(\theta)$, is a function of a set of scenario parameters, $\theta = [\theta_1, \theta_2, ..., \theta_n]$, indicative of an operating environment of the ADS feature. Moreover, the LSF, $g_i(\theta)$, comprises:

A first function, $g_F(\theta)$, that is a function of at least one scenario parameter indicative of an occurrence of a failure scenario.

A second function, $g_S(\theta)$, that is a function of at least one scenario parameter indicative of a severity level of the failure scenario, such that the estimated probability of failure of the ADS feature is further indicative of an estimated probability of failure for at least two different severity levels.

In summary, the solution proposed herein enables estimation of a probability of crash of different severities, by utilizing a limit state function (LSF) that attains increasingly negative or positive values after crash (e.g. when TTC = 0 or PET = 0). This may for example be achieved by defining a function for severity that is more negative for more severe crashes. In accordance with an example embodiment, the LSF comprises a function of the delta speed at collision (i.e. minus delta speed at collision). In this way a higher delta speed at collision attains a more negative value, which may be translated to a higher severity crash. There are for example different studies showing how to map severity with delta speeds (e.g. S1 for $\Delta V > 35$ kph, S2 for $\Delta V > 70$, etc.).

However, may be desirable to define a more detailed severity function (i.e. a sub-function of the LSF), that further considers e.g. the absolute speeds at collision, the angle and point of impact, the colliding vehicle properties (weight, height, features), etc. Moreover, by means of the concepts proposed herein, the severity may also be estimated for both host and the other vehicle/actor. This may for example be advantageous for scenarios involving motorcycles where the speed for same severity levels are generally lower.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the control system 10) may be or include any number of hardware components for conducting data or signal processing or for executing computer code 14 stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the disclosure may be at least in part implemented by means of both hardware and software, and that several "means" or "units" may be represented by the same item of hardware. It will also be understood that, although the term first, second, etc. may be used herein to describe various elements, these elements should not be limited by these terms. These terms are only used to distinguish one element from another. For example, a first function could be termed a second function, and, similarly, a second function could be termed a first function, without departing from the scope of the embodiments. The first function and the second function are both functions, but they are not the same function.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present disclosure. Other solutions, uses, objectives, and functions within the scope of the disclosure as claimed in the below described patent embodiments should be apparent for the person skilled in the art.

**Claims**

1. A computer-implemented method (100) for estimating a probability of failure for different severity levels for an Automated Driving System, ADS, feature in a virtual test environment, the method comprising:

   obtaining (101) a parametrized statistical model (3) indicative of a statistical distribution related to at least one scenario in a real-world environment in an Operational Design Domain, ODD, of the ADS feature;
   estimating (102) a probability of failure of the ADS feature over time in the virtual test environment by running a structural reliability method based on the parametrized statistical model and on a Limit State Function, LSF, indicative of the ADS feature's performance;
   wherein the LSF, $g_i(\theta)$, is a function of a set of scenario parameters, $\theta = [\theta_1, \theta_2, ..., \theta_n]$, indicative of an operating environment of the ADS feature, the LSF, $g_i(\theta)$, comprising:

   a first function, $g_F(\theta)$, that is a function of at least one scenario parameter indicative of an occurrence of a failure scenario;
   a second function, $g_S(\theta)$, that is a function of at least one scenario parameter indicative of a severity level of the failure scenario, such that the estimated probability of failure of the ADS feature is further indicative of an estimated probability of failure for at least two different severity levels.

2. The computer-implemented method (100) according to claim 1, wherein the first function, $g_F(\theta)$, is defined so to have a zero value for failure scenarios and a non-zero value for non-failure scenarios; and wherein the second function, $g_S(\theta)$, is defined so to have a zero value for non-failure scenarios, and a non-zero value for failure scenarios.

3. The computer-implemented method (100) according to claim 1 or 2, wherein the structural reliability method is a subset simulation method.

4. The computer-implemented method (100) according to any one of the preceding claims, wherein the LSF, $g_i(\theta)$, further comprises class parameter $c_i$ defining a threshold value for the severity level of the failure scenario.

5. The computer-implemented method (100) according to any one of the preceding claims, wherein the first function, $g_F(\theta)$, is a function of at least one of a Time To Collision, TTC, a Post Encroachment Time, PET, and a Brake Threat Number, BTN; and wherein the second function, $g_S(\theta)$, is a function of at least one of a delta speed at collision, a weight of the vehicle, a weight of a collision object, an absolute speed of the vehicle at collision, an angle of the vehicle at collision, a restitution factor, and a point of impact at collision.

6. A computer-readable storage medium (12) storing one or more programs configured to be executed by one or more processors of a processing system, the one or more programs comprising instructions (14) for performing the method (100) according to any one of the preceding claims.

7. A processing system (10) for estimating a probability of failure for different severity levels for an Automated Driving System, ADS, feature in a virtual test environment, the processing system comprising:
control circuitry (11) configured to:

obtain a parametrized statistical model indicative of a statistical distribution related to at least one scenario in a real-world environment in an Operational Design Domain, ODD, of the ADS feature;
estimate a probability of failure of the ADS feature over time in the virtual test environment by running a structural reliability method based on the parametrized statistical model and on a Limit State Function, LSF, indicative of the ADS feature's performance;
wherein the LSF, $g_i(\theta)$, is a function of a set of scenario parameters, $\theta = [\theta_1, \theta_2, ..., \theta_n]$, indicative of an operating environment of the ADS feature, the LSF, $g_i(\theta)$, comprising:

a first function, $g_F(\theta)$, that is a function of at least one scenario parameter indicative of an occurrence of a failure scenario;
a second function, $g_S(\theta)$, that is a function of at least one scenario parameter indicative of a severity level of the failure scenario, such that the estimated probability of failure of the ADS feature is further indicative of an estimated probability of failure for at least two different severity levels.

8. The processing system (10) according to claim 7, wherein the first function, $g_F(\theta)$, is defined so to have a zero value for failure scenarios and a non-zero value for non-failure scenarios; and wherein the second function, $g_S(\theta)$, is defined so to have a zero value for non-failure scenarios, and a non-zero value for failure scenarios.

9. The processing system (10) according to claim 7 or 8, wherein the structural reliability method is a subset simulation method.

10. The processing system (10) according to any one of claims 7 - 9, wherein the first function, $g_F(\theta)$, is a function of at least one of a Time To Collision, TTC, a Post Encroachment Time, PET, and a Brake Threat Number, BTN; and wherein the second function, $g_S(\theta)$, is a function of at least one of a delta speed at collision, a weight of the vehicle, a weight of a collision object, an absolute speed of the vehicle at collision, an angle of the vehicle at collision, a restitution factor, and a point of impact at collision.

11. The processing system (10) according to any one of claims 7 -10, wherein the first function, $g_F(\theta)$, is a function of at least one of a Time To Collision, TTC, a Post Encroachment Time, PET, and a Brake Threat Number, BTN; and wherein the second function, $g_S(\theta)$, is a function of at least one of a delta speed at collision, a weight of the vehicle, a weight of a collision object, an absolute speed of the vehicle at collision, an angle of the vehicle at collision, a restitution factor, and a point of impact at collision.

**Patentansprüche**

1. Computerimplementiertes Verfahren (100) zum Schätzen einer Fehlerwahrscheinlichkeit für unterschiedliche Schweregrade für ein Merkmal eines automatisierten Fahrsystems, ADS, in einer virtuellen Testumgebung, wobei das Verfahren Folgendes umfasst:

Erhalten (101) eines parametrisierten statistischen Modells (3), das auf eine statistische Verteilung in Bezug auf mindestens ein Szenario in einer realen Umgebung in einer Operational Design Domain, ODD, des ADS-Merkmals hinweist;
Schätzen (102) einer Fehlerwahrscheinlichkeit des ADS-Merkmals im Zeitverlauf in der virtuellen Testumgebung durch Ausführen eines Verfahrens der strukturellen Zuverlässigkeit in dem parametrisierten statistischen Modell und an einer Grenzzustandsfunktion, LSF, die auf die Leistung des ADS-Merkmals hinweist;
wobei die LSF, $g_i(\theta)$, eine Funktion eines Satzes von Szenarioparametern, $\theta = [\theta_1, \theta_2, ..., \theta_n]$, ist, die auf eine Betriebsumgebung des ADS-Merkmals hinweisen, wobei die LSF, $g_i(\theta)$, Folgendes umfasst:

eine erste Funktion, $g_F(\theta)$, bei der es sich um eine Funktion von mindestens einem Szenarioparameter handelt, der auf ein Auftreten eines Fehlerszenarios hinweist;
eine zweite Funktion, $g_s(\theta)$, bei der es sich um eine Funktion von mindestens einem Szenarioparameter handelt, der auf einen Schweregrad des Fehlerszenarios hinweist, sodass die geschätzte Fehlerwahrscheinlichkeit des ADS-Merkmals ferner auf eine geschätzte Fehlerwahrscheinlichkeit für mindestens zwei unterschiedliche Schweregrade hinweist.

2. Computerimplementiertes Verfahren (100) nach Anspruch 1, wobei die erste Funktion, $g_F(\theta)$, so definiert ist, dass sie einen Wert von null für Fehlerszenarien und einen Wert ungleich null für Nicht-Fehlerszenarien aufweist; und wobei die zweite Funktion, $g_s(\theta)$, so definiert ist, dass sie einen Wert von null für Nicht-Fehlerszenarien und einen Wert ungleich null für Fehlerszenarien aufweist.

3. Computerimplementiertes Verfahren (100) nach Anspruch 1 oder 2, wobei das Verfahren der strukturellen Zuverlässigkeit ein Teilsatzsimulationsverfahren ist.

4. Computerimplementiertes Verfahren (100) nach einem der vorangehenden Ansprüche, wobei die LSF, $g_i(\theta)$, ferner einen Klassenparameter $c_i$ umfasst, der einen Schwellenwert für den Schweregrad des Fehlerszenarios definiert.

5. Computerimplementiertes Verfahren (100) nach einem der vorangehenden Ansprüche, wobei die erste Funktion, $g_F(\theta)$, eine Funktion von mindestens einem von einer Time To Collision, TTC, einer Post Encroachment Time, PET, und einer Brake Treat Number, BTN, ist; und wobei die zweite Funktion, $g_s(\theta)$, eine Funktion von mindestens einem von einer Delta-Geschwindigkeit bei einer Kollision, einem Gewicht des Fahrzeugs, einem Gewicht eines Kollisionsobjekts, einer Absolutgeschwindigkeit des Fahrzeugs bei der Kollision, einem Winkel des Fahrzeugs bei der Kollision, einem Restitutionsfaktor und einem Aufprallpunkt bei der Kollision ist.

6. Computerlesbares Speichermedium (12), auf dem ein oder mehrere Programme gespeichert sind, die dazu konfiguriert sind, durch einen oder mehrere Prozessoren eines Verarbeitungssystems ausgeführt zu werden, wobei das eine oder die mehreren Programme Anweisungen (14) zum Durchführen des Verfahrens (100) nach einem der vorangehenden Ansprüche umfassen.

7. Verarbeitungssystem (10) zum Schätzen einer Fehlerwahrscheinlichkeit für unterschiedliche Schweregrade für ein Merkmal eines automatisierten Fahrsystems, ADS, in einer virtuellen Testumgebung, wobei das Verarbeitungssystem Folgendes umfasst:
eine Steuerschaltung (11), die zu Folgendem konfiguriert ist:

Erhalten eines parametrisierten statistischen Modells, das auf eine statistische Verteilung in Bezug auf mindestens ein Szenario in einer realen Umgebung in einer Operational Design Domain, ODD, des ADS-Merkmals hinweist;

Schätzen einer Fehlerwahrscheinlichkeit des ADS-Merkmals im Zeitverlauf in der virtuellen Testumgebung durch Ausführen eines Verfahrens der strukturellen Zuverlässigkeit in dem parametrisierten statistischen Modell und an einer Grenzzustandsfunktion, LSF, die auf die Leistung des ADS-Merkmals hinweist;

wobei die LSF, $g_i(\theta)$, eine Funktion eines Satzes von Szenarioparametern, $\theta = [\theta_1, \theta_2, ..., \theta_n]$, ist, die auf eine Betriebsumgebung des ADS-Merkmals hinweisen, wobei die LSF, $g_i(\theta)$, Folgendes umfasst:

eine erste Funktion, $g_F(\theta)$, bei der es sich um eine Funktion von mindestens einem Szenarioparameter handelt, der auf ein Auftreten eines Fehlerszenarios hinweist;

eine zweite Funktion, $g_s(\theta)$, bei der es sich um eine Funktion von mindestens einem Szenarioparameter handelt, der auf einen Schweregrad des Fehlerszenarios hinweist, sodass die geschätzte Fehlerwahrscheinlichkeit des ADS-Merkmals ferner auf eine geschätzte Fehlerwahrscheinlichkeit für mindestens zwei unterschiedliche Schweregrade hinweist.

8. Verarbeitungssystem (10) nach Anspruch 7, wobei die erste Funktion, $g_F(\theta)$, so definiert ist, dass sie einen Wert von null für Fehlerszenarien und einen Wert ungleich null für Nicht-Fehlerszenarien aufweist; und

wobei die zweite Funktion, $g_s(\theta)$, so definiert ist, dass sie einen Wert von null für Nicht-Fehlerszenarien und einen Wert ungleich null für Fehlerszenarien aufweist.

9. Verarbeitungssystem (10) nach Anspruch 7 oder 8, wobei das Verfahren der strukturellen Zuverlässigkeit ein Teilsatzsimulationsverfahren ist.

10. Verarbeitungssystem (10) nach einem der Ansprüche 7-9, wobei die erste Funktion, $g_F(\theta)$, eine Funktion von mindestens einem von einer Time To Collision, TTC, einer Post Encroachment Time, PET, und einer Brake Treat Number, BTN; und

wobei die zweite Funktion, $g_s(\theta)$, eine Funktion von mindestens einem von einer Delta-Geschwindigkeit bei einer Kollision, einem Gewicht des Fahrzeugs, einem Gewicht eines Kollisionsobjekts, einer Absolutgeschwindigkeit des Fahrzeugs bei der Kollision, einem Winkel des Fahrzeugs bei der Kollision, einem Restitutionsfaktor und einem Aufprallpunkt bei der Kollision ist.

11. Verarbeitungssystem (10) nach einem der Ansprüche 7-10, wobei die erste Funktion, $g_F(\theta)$, eine Funktion von mindestens einem von einer Time To Collision, TTC, einer Post Encroachment Time, PET, und einer Brake Treat Number, BTN; und

wobei die zweite Funktion, $g_s(\theta)$, eine Funktion von mindestens einem von einer Delta-Geschwindigkeit bei einer Kollision, einem Gewicht des Fahrzeugs, einem Gewicht eines Kollisionsobjekts, einer Absolutgeschwindigkeit des Fahrzeugs bei der Kollision, einem Winkel des Fahrzeugs bei der Kollision, einem Restitutionsfaktor und einem Aufprallpunkt bei der Kollision ist.

## Revendications

1. Procédé mis en oeuvre par ordinateur (100) pour estimer une probabilité de défaillance pour différents niveaux de gravité pour une fonctionnalité de système de conduite automatisée (ADS), dans un environnement de test virtuel, le procédé comprenant :

l'obtention (101) d'un modèle statistique paramétré (3) indicatif d'une distribution statistique liée à au moins un scénario dans un environnement réel dans un domaine de conception opérationnelle (ODD) de la fonctionnalité ADS ;

l'estimation (102) d'une probabilité de défaillance de la fonctionnalité ADS au fil du temps dans l'environnement de test virtuel en exécutant un procédé de fiabilité structurelle sur la base du modèle statistique paramétré et sur une fonction d'état limite (LSF) indicative des performances de la fonctionnalité ADS ;

dans lequel le LSF, $g_i(\theta)$, est une fonction d'un ensemble de paramètres de scénario, $\theta = [\theta_1, \theta_2,..., \theta_n]$, indiquant un environnement de fonctionnement de la fonctionnalité ADS, le LSF, $g_i(\theta)$, comprenant :

une première fonction, $g_F(\theta)$, qui est une fonction d'au moins un paramètre de scénario indicatif de l'occurrence d'un scénario de défaillance ;

une seconde fonction, $g_s(\theta)$, qui est une fonction d'au moins un paramètre de scénario indicatif d'un niveau de gravité du scénario de défaillance, de sorte que la probabilité estimée de défaillance de la fonctionnalité ADS est en outre indicative d'une probabilité estimée de défaillance pour au moins deux niveaux de gravité différents.

2. Procédé mis en oeuvre par ordinateur (100) selon la revendication 1, dans lequel la première fonction, $g_F(\theta)$, est définie pour avoir une valeur nulle pour les scénarios de défaillance et une valeur non nulle pour les scénarios de non-défaillance ; et
dans lequel la seconde fonction, $g_S(\theta)$, est définie de manière à avoir une valeur nulle pour les scénarios de non-défaillance, et une valeur non nulle pour les scénarios de défaillance.

3. Procédé mis en oeuvre par ordinateur (100) selon la revendication 1 ou 2, dans lequel le procédé de fiabilité structurelle est un procédé de simulation de sous-ensemble.

4. Procédé mis en oeuvre par ordinateur (100) selon l'une quelconque des revendications précédentes, dans lequel le LSF, $g_i(\theta)$, comprend en outre un paramètre de classe q définissant une valeur seuil pour le niveau de gravité du scénario de défaillance.

5. Procédé mis en oeuvre par ordinateur (100) selon l'une quelconque des revendications précédentes, dans lequel la première fonction, $g_F(\theta)$, est une fonction d'au moins un parmi un temps avant collision (TTC) un temps après empiètement (PET) et un numéro de menace de freinage (BTN) ; et
dans lequel la seconde fonction, $g_S(\theta)$, est une fonction d'au moins un parmi une vitesse delta lors de la collision, un poids du véhicule, un poids d'un objet de collision, une vitesse absolue du véhicule lors de la collision, un angle du véhicule au moment de la collision, un facteur de restitution et un point d'impact au moment de la collision.

6. Support de stockage lisible par ordinateur (12) stockant un ou plusieurs programmes configurés pour être exécutés par un ou plusieurs processeurs d'un système de traitement, l'un ou les plusieurs programmes comprenant des instructions (14) pour réaliser le procédé (100) selon l'une quelconque des revendications précédentes.

7. Système de traitement (10) pour estimer une probabilité de défaillance pour différents niveaux de gravité pour une fonctionnalité de système de conduite automatisée, (ADS) dans un environnement de test virtuel, le système de traitement comprenant :
un circuit de commande (11) configuré pour :

obtenir un modèle statistique paramétré indicatif d'une distribution statistique liée à au moins un scénario dans un environnement réel dans un domaine de conception opérationnelle (ODD) de la fonctionnalité ADS ;
estimer une probabilité de défaillance de la fonctionnalité ADS au fil du temps dans l'environnement de test virtuel en exécutant une méthode de fiabilité structurelle sur la base du modèle statistique paramétré et sur une fonction d'état limite (LSF) indicative des performances de la fonctionnalité ADS ;
dans lequel le LSF, $g_i(\theta)$, est une fonction d'un ensemble de paramètres de scénario, $\theta = [\theta_1, \theta_2,..., \theta_n]$, indicatif d'un environnement d'exploitation de la fonctionnalité ADS, le LSF, $g_i(\theta)$, comprenant :

une première fonction, $g_F(\theta)$, qui est une fonction d'au moins un paramètre de scénario indicatif de l'occurrence d'un scénario de défaillance ;
une seconde fonction, $g_S(\theta)$, qui est une fonction d'au moins un paramètre de scénario indicatif d'un niveau de gravité du scénario de défaillance, tel que
la probabilité de défaillance estimée de la fonctionnalité ADS est en outre indicative d'une probabilité de défaillance estimée pour au moins deux niveaux de gravité différents.

8. Système de traitement (10) selon la revendication 7, dans lequel la première fonction, $g_F(\theta)$, est définie pour avoir une valeur nulle pour les scénarios de défaillance et une valeur non nulle pour les scénarios de non défaillance ; et
dans lequel la seconde fonction, $g_S(\theta)$, est définie de manière à avoir une valeur nulle pour les scénarios de non-défaillance, et une valeur non nulle pour les scénarios de défaillance.

9. Système de traitement (10) selon la revendication 7 ou 8, dans lequel le procédé de fiabilité structurelle est un procédé de simulation de sous-ensemble.

10. Système de traitement (10) selon l'une quelconque des revendications 7 à 9, dans lequel la première fonction, $g_F(\theta)$, est une fonction d'au moins un parmi un temps avant collision (TTC) un temps après empiétement (PET) et un numéro de menace de freinage (BTN) ; et
dans lequel la seconde fonction, $g_s(\theta)$, est une fonction d'au moins un parmi une vitesse delta lors de la collision, d'un poids du véhicule, un poids d'un objet de collision, une vitesse absolue du véhicule lors de la collision, un angle du véhicule au moment de la collision, un facteur de restitution et un point d'impact au moment de la collision.

11. Système de traitement (10) selon l'une quelconque des revendications 7 à 10, dans lequel la première fonction, $g_F(\theta)$, est une fonction d'au moins un parmi un temps avant collision (TTC), un temps après empiétement (PET), et un numéro de menace de freinage (BTN) ; et
dans lequel la seconde fonction, $g_s(\theta)$, est une fonction d'au moins un parmi une vitesse delta lors de la collision, un poids du véhicule, un poids d'un objet de collision, une vitesse absolue du véhicule lors de la collision, un angle du véhicule au moment de la collision, un facteur de restitution et un point d'impact au moment de la collision.

Fig. 1

Fig. 2

Fig. 3

**EP 3 940 487 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2019213103 A1
- EP 20169897